## Europäisches Patentamt

## European Patent Office

## Office européen des brevets

(11) Publication number: **0 167 628**
**B1**

## EUROPEAN PATENT SPECIFICATION

(45) Date of publication of patent specification: **15.11.89**

(21) Application number: **85900196.8**

(22) Date of filing: **19.12.84**

(86) International application number:
**PCT/JP84/00604**

(87) International publication number:
**WO 85/02814 04.07.85 Gazette 85/15**

(51) Int. Cl.⁴: **B 29 D 11/00, B 29 D 7/01,**
**B 29 C 55/04, B 29 C 55/08,**
**G 02 B 5/30, G 02 B 1/08**

(54) POLARIZING FILM AND METHOD OF MANUFACTURING THE SAME.

(30) Priority: 23.12.83 JP 242153/83
16.04.84 JP 74890/84
25.05.84 JP 104812/84
25.05.84 JP 104813/84
25.05.84 JP 104814/84
04.06.84 JP 113191/84
13.07.84 JP 144444/84

(43) Date of publication of application:
15.01.86 Bulletin 86/03

(45) Publication of the grant of the patent:
15.11.89 Bulletin 89/46

(84) Designated Contracting States:
FR

(56) References cited:
GB-A-4 973 373     JP-A-58 124 621
JP-A-56 158 301    JP-A-58 125 002
JP-A-57 084 409    US-A-2 246 087
JP-A-58 066 902    US-A-3 253 506
JP-A-58 068 008

(73) Proprietor: MITSUI TOATSU CHEMICALS, Inc.
2-5 Kasumigaseki 3-chome
Chiyoda-Ku Tokyo 100 (JP)

(72) Inventor: HOSONUMA, Sin 49-2, Haiyama,
Okehazama
Arimatsucho, Midori-ku
Nagoya-shi Aichi 458 (JP)
Inventor: FUJIO, Junichi
5, Takiharucho, Minami-ku
Nagoya-shi Aichi 457-91 (JP)
Inventor: TANAKA, Kozo
2882, Iijimacho
Totsuka-ku, Yokohama-shi Kanagawa 244 (JP)
Inventor: SUZUKI, Harue
2-18-23, Ohmorinishi
Ohta-ku Tokyo 143 (JP)
Inventor: BABA, Kenichi
2-16-803, Wakabadai
Asahi-ku, Yokohama-shi Kanagawa 241 (JP)
Inventor: NAKAMURA, Katsuji
1541, Yabecho
Totsuka-ku, Yokohama-shi Kanagawa 244 (JP)
Inventor: NAKATSUKA, Masakatsu
10-8, Hisagi 4-chome
Zushi-shi Kanagawa 249 (JP)
Inventor: NISHIZAWA, Tsutomu
460-23-4-302, Kamigocho
Totsuka-ku, Yokohama-shi Kanagawa 247 (JP)

Courier Press, Leamington Spa, England.

**EP 0 167 628 B1**

(56) References cited:
**CHEMICAL ABSTRACTS, vol. 90, no. 4, 1979,
page 45, abstract no. 24384n, Columbus Ohio,
US**

(74) Representative: **Behaghel, Pierre et al
CABINET PLASSERAUD 84 rue d'Amsterdam
F-75009 Paris (FR)**

**Description**

Technical field

This invention relates to a polarizing film containing a photodichroic material and having excellent polarizing performance and optical uniformity, as well as a method of making the same.

Background art

In recent years, polarizing films are being widely used as an element of liquid-crystal display devices for electronic computers, watches and the like or as glare shields applied to glass and the like. However, the development of electronics industry has enlarged the field of application of liquid-crystal display devices, leading to a demand for improved performance of liquid crystals themselves. As a result, it has also come to be required that polarizing films used in combination with liquid crystals should attain an improved degree of polarization, exhibit optical uniformity, and have excellent thermal resistance and moisture resistance.

Conventionally, polarizing films comprising polyvinyl alcohol (PVA) and iodine are commonly used because of their good polarizing properties. However, such polarizing films of the PVA-iodine type have the disadvantage of being insufficient in moisture resistance and thermal resistance. Accordingly, durable polarizing films comprising a thermoplastic resin and a photodichroic material are now being developed (see US—A—3,253,506). Nevertheless, such polarizing films comprising a thermoplastic resin and a photodichroic material fail to exhibit satisfactorily high polarizing performance and, therefore, have not yet been put to practical use under the present situation.

Conventionally, two general methods of making a polarizing film containing a photodichroic material have been known. One method involves uniaxially orienting a film of base resin according to any of such techniques as roll stretching, roll pressing, tentering, etc. and then impregnating the film with iodine or a photodichroic material, while the other involves uniaxially orienting a film of base resin containing a photodichroic material according to any of the aforesaid techniques. In either of these methods, the base resin is uniaxially oriented to arrange its molecules in one direction and the photodichroic material is oriented on the basis of the orientation of the base resin to manifest its polarizing performance. Accordingly, it has been believed that there is a close relationship between the state of orientation of the base resin and the polarizing performance of the film.

Usually, the state of orientation of a resin is evaluated by determining its uniaxial orientation coefficient (f), with a greater value of f indicating a higher degree of orientation. Thus, it has been assumed that the polarizing performance of a film becomes higher as its degree of orientation is increased. However, in the course of research on polarizing films consisting of a hydrophobic base resin and containing a photodichroic material, the present inventors have found a phenomenon which cannot necessarily be accounted for by the abovedescribed principle. More specifically, it has been found that, in order to obtain a film having good polarizing properties, the film must have not only a high uniaxial orientation coefficient (f) as determined by the X-ray diffraction method, but also good uniformity of diffracted light intensity on the Debye-Scherrer ring produced when X-rays parallel to the reference axis (which will be described later) of the film impinge on a surface perpendicular to the reference axis.

Thus, it has also been found that, in order to attain at least a predetermined degree of uniformity of diffracted light intensity on the aforesaid Debye-Scherrer ring, the base resin must be uniaxially oriented so as not to cause any substantial orientation in directions other than that of the orientation axis of the film.

Disclosure of the invention

It is an object of the present invention to provide a polarizing film having excellent thermal resistance and moisture resistance, giving a high degree of polarization, and exhibiting good optical uniformity.

It is another object of the present invention to provide a method of making polarizing films which permits polarizing films having excellent polarizing performance to be consistently produced according to a simple procedure.

According to the present invention, there is provided a polarizing film containing a base resin and a photodichroic material which is characterized in that

(1) the uniaxial orientation coefficient (f) of the principal crystal axis of the base resin with respect to the reference axis is not less than 0.7, the reference axis being defined, when the impinging X-rays are perpendicular to the surface of the polarizing film, as an axis which is in the plane of the polarizing film and which makes an angle of 90° with the axis made by normal projection of the direction of the strongest X-rays in the Debye-Scherrer ring diffracted by crystal planes parallel to the principal crystal axis of the base resin on the polarizing film; and

(2) when X-rays travelling parallel to the reference axis impinge on a surface of the film which is perpendicular to the reference axis, the product (f×R) of the aforesaid uniaxial orientation coefficient (f) and the ratio ($R = (I_{min}/I_{max}) \times 100$) of the minimum value ($I_{min}$) to the maximum value ($I_{max}$) of diffracted X-ray intensity on the resulting Debye-Scherrer ring is not less than 10.

The above-described polarizing film of the present invention can basically be made by the method of the present invention which is described hereinbelow. Specifically, according to the present invention, there is also provided a method of making polarizing films containing a base resin and a photodichroic material which includes the step of orienting an unoriented film, the method being characterized in that the unoriented film is oriented in one direction with a stretch ratio of 2.5 or greater so as to give an X value of 0.5 or greater, the X value being calculated from the equation

$$X=(d \times L)/(D \times l) \qquad (I)$$

where D is the measured thickness of the unoriented film, L is the measured dimension of the unoriented film in the direction perpendicular to the direction of orientation, d is the measured thickness of the oriented film, and l is the measured dimension of the oriented film in the direction perpendicular to the direction of orientation.

More specifically, this method may be carried out according to any of the following four embodiments.

In a first embodiment, the unoriented film is transversely stretched while its longitudinal dimension is being forcedly reduced by 20% or more.

In a second embodiment, the unoriented film is transversely stretched after it has been contracted so as to reduce its apparent longitudinal dimension to 80% or less of its actual longitudinal dimension.

In a third embodiment, the unoriented film is oriented by a roll stretching process in which a roll having a curved sectional shape is used as the lower-speed roll of the stretching roll pair.

In the fourth embodiment, the unoriented film is oriented by a roll stretching process in which at least one forcedly driven roll is disposed between the low-speed rolls and the high-speed rolls and the film is allowed to slip on the surface of the forcedly driven roll while being kept at its orientation temperature or above.

Brief description of the drawings

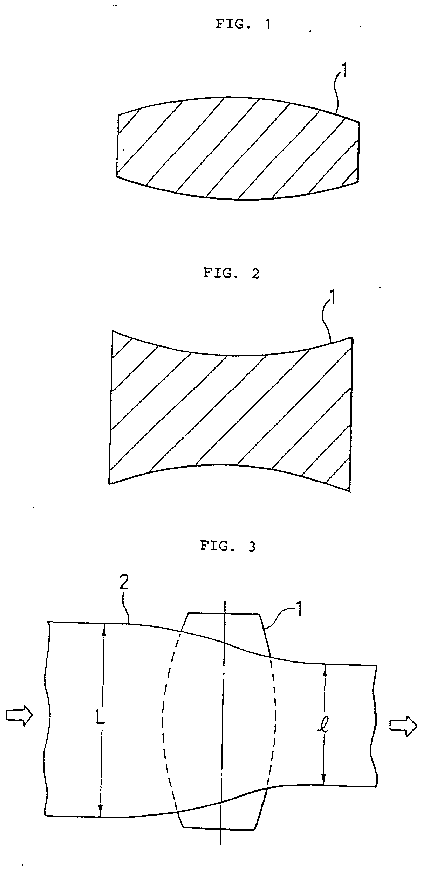

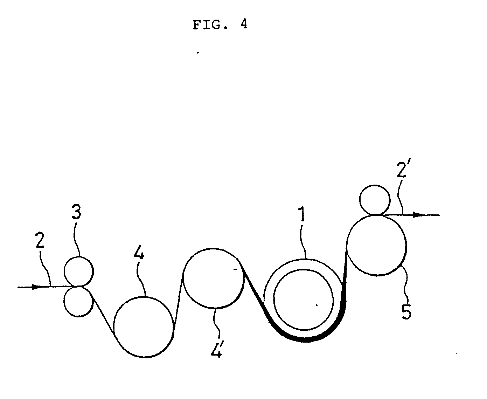

Figs. 1 and 2 are sectional views of curved heating rolls for use in the third embodiment of the method of making polarizing films in accordance with the present invention; Fig. 3 is a schematic plan view showing the change in width of the film after being passed over the curved heating roll used in this embodiment; and Fig. 4 is a schematic view of an exemplary process for carrying out this embodiment.

Best mode for carrying out the invention

As the base resin used in the present invention, there may be used any of various resins which can be made into transparent films and can be oriented. Among others, hydrophobic thermoplastic resins are preferred. Examples of such preferred thermoplastic resins are homopolymers and copolymers including polyesters, polyamides, polyolefins, polyvinyl halides, polystyrene, polycarbonates, polyacrylates, polysulfones, polyethers, polyvinyl alcohol and the like. Among these resins, polyolefins, polyamides and polyesters are particularly preferred.

Photodichroic materials may be defined as materials having anisotropy in light absorption properties. The photodichroic material used in the present invention can be selected from among dyes and organic pigments which are known to exhibit photodichroism, and useful dyes include direct dyes, disperse dyes, ionic dyes and reactive dyes (as disclosed, for example, in Japanese Patent Laid-Open No. 106743/'78 and Japanese Patent Publication No. 3944/'74). Among others, organic coloring agents that can be dispersed or dissolved in the aforesaid thermoplastic resins or can impart color thereto are preferred. The amount of photodichroic material used may vary according to the desired degree of coloring of the polarizing film. However, the photodichroic material is usually used in an amount of 0.003 to 3% by weight, preferably 0.01 to 1% by weight, based on the weight of the high polymer.

The unoriented film used in the present invention comprises a film formed from the aforesaid base resin, having or not having the photodichroic material blended therein, according to an ordinary melt extrusion process or other various processes such as solvent casting and the like. Where the photodichroic material is not previously blended in the base resin, the film before or after orientation can be impregnated with the photodichroic material according to a technique such as dyeing and the like. In addition to the photodichroic material, the base resin may contain stabilizers, ultraviolet light absorbers, lubricants, surface active agents and the like as desired.

The polarizing film of the present invention can be made by orienting the aforesaid unoriented film at a temperature between the melting point and glass transition point of the base resin. Thereafter, the film is fixed, if desired, by heating it over a heating roll, in a hot-air oven or with an infrared heater.

The orientation may be carried out according to any of various processes including stretching processes such as roll stretching, bath stretching, hot plate stretching, tentering, etc., and pressing processes such as roll pressing, etc. However, it is necessary to orient the film so as not to cause any substantial orientation in directions other than that of the orientation axis, and the polarizing film of the present invention cannot be obtained unless a process meeting this requirement is employed. The method of making polarizing films in accordance with the present invention will be more fully described with reference to various specific embodiments in which the film is not substantially oriented in directions other than that of its orientation axis.

The polarizing film of the present invention can be characterized by meeting the following conditions concerning the two parameters determinable by X-ray diffraction method.

(1) The uniaxial orientation coefficient (f) of the principal crystal axis of the base resin with respect to the reference axis should be not less than 0.7, the reference axis being defined, when the impinging X-rays are perpendicular to the surface of the polarizing film, as an axis which is in the plane of the polarizing film and which makes an angle of 90° with the axis made by normal projection of the direction of the strongest X-rays in the Debye-Scherrer ring diffracted by crystal planes parallel to the principal crystal axis of the base resin on the polarizing film.

If the uniaxial orientation coefficient (f) is less than 0.7, the base resin will not be sufficiently oriented in one direction and the film will fail to give a satisfactorily high degree of polarization. More preferably, the value of f should be not less than 0.8.

(2) When a specimen of the polarizing film is cut out so as to have a surface perpendicular to the reference axis and X-rays impinge on the specimen parallel to the reference axis, the product $(f \times R)$ of the aforesaid uniaxual orientation coefficient (f) and the ratio

$$(R=(I_{min}/I_{max}) \times 100)$$

of the minimum value $(I_{min})$ to the maximum value $(I_{max})$ of diffracted X-ray intensity on the resulting Debye-Scherrer ring should be not less than 10.

If the value of $(f \times R)$ is less than 10, the crystals will exhibit a uniaxial planar orientation and even though the value of f is 0.7 or greater, the film will fail to give a satisfactorily high degree of polarization. The value of $(f \times R)$ should preferably be not less than 10 and more preferably not less than 20.

The X-ray diffraction method for characterizing the polarizing film of the present invention will now be described hereinbelow.

(a) Determination of the reference axis

A polarizing film is attached to the fiber sample mount of an X-ray diffractometer (Model SG-7; manufactured by Rigaku Denki K.K.) and its X-ray diffraction spectrum is recorded under the following conditions.

X-ray source: Cu-Kα (Ni filter).
Applied voltage: 35 kV.
Applied current: 20 mA.
Slit system: Pinhole slit (3 mm in diameter)—vertical slit (2°)—horizontal slit (2°).
Diffraction angle: Adjusted to the diffraction angle of an arbitrarily selected crystal plane parallel to the principal crystal axis.
Background and non-crystal peaks were separated from the X-ray diffraction spectrum so recorded. Then, the reference axis is defined as an axis making an angle of 90° with the direction giving the maximum crystal peak intensity.

(b) Measurement and calculation of the uniaxial orientation coefficient (f)

A cylindrical specimen of about 1 mm diameter having the reference axis as its longitudinal axis is prepared. This specimen is attached to the fiber sample mount and its X-ray diffraction spectrum is recorded.

Crystal peaks are separated from the X-ray diffraction spectrum so recorded. The mean square cosine $(<\cos^2\phi>)$ of principal crystal axis with respect to the reference axis is determined and the value of f is calculated according to the following equation.

$$f=1/2 \times (3 \times <\cos^2\phi> - 1)$$

where $\phi$ is the angle which the principal crystal axis of the base resin makes with the reference axis.

(c) Measurement and calculation of the ratio $(R=(I_{min}/I_{max}) \times 100)$ of diffracted X-ray intensity

A polarizing film is cut into ribbons of 1 mm width and 20 mm length in such a way that the direction of the width is the same as that of the reference axis and the direction of the length is in the same plane as and perpendicular to that of the reference axis. Then, a specimen is prepared by stacking these ribbons to a thickness of about 0.5 mm with their reference axis parallel to one another.

This specimen is attached to the fiber sample mount in such a way that X-rays parallel to the reference axis impinge on a surface perpendicular to the reference axis, and its X-ray diffraction spectrum is recorded in the same manner as in (a). The maximum value $(I_{max})$ and minimum value $(I_{min})$ of crystal peak intensity on the Debye-Scherrer ring are obtained and the ratio R is calculated from these values according to the following equation:

$$R=(I_{min}/I_{max}) \times 100$$

Now, the method of making polarizing films in accordance with the present invention will be more fully described hereinbelow.

The method of the present invention is characterized in that an unoriented film is oriented in one direction with a stretch ratio of 2.5 or greater so as to give an X value of 0.5 or greater and preferably 0.7 or greater; the X value being calculated from the following equation: .

$$X=(d \times L)/(D \times l) \qquad (I)$$

In the above equation (I), D and d are the measured thicknesses of the film before and after orientation, respectively, and represent the actual thicknesses of the resin layer. L and l are the measured dimensions, in the direction perpendicular to the direction of orientation, of the film before and after orientation, respectively, and represent the actual dimensions of an effectively oriented portion of the film. L and l can be determined by imprinting a straight line perpendicular to the direction of orientation on the middle portion of the film and measuring its length before and after orientation.

In the present method, there may be employed various orientation processes including well-known stretching, roll pressing and other processes. In any case, it is necessary to orient the unoriented film with a stretch ratio of 2.5 or greater. If the stretch ratio is less than 2.5, the film will fail to exhibit satisfactorily good polarizing properties and will be unsuitable for use as a polarizing film. Higher stretch ratios are more desirable for polarizing performance. However, if the stretch ratio exceeds 10, poor workability will usually result because of the occurrence of film breakage or the like during the stretching process. Thus, the stretch ratio should preferably range from 3 to 10.

If the X value is less than 0.5, the film will not exhibit good polarizing properties even though the stretch ratio is sufficiently high. Although no upper limit is set to the X value, it is preferable to employ an X value of 1.0 or less so as not to impair the flatness of the film.

The present method will be more specifically explained hereinbelow. Where an unoriented film is stretched in the longitudinal (or lengthwise) direction by a roll stretching process, there may be employed a multi-stage stretching process, a long-interval stretching process in which the film is allowed to slip on a heated roll or plate, a stretching process in which the film is stretched within an oven having a temperature gradient established therein, and the like. What is important is to carry out the stretching operation at a temperature which permits the film to be oriented and in such a way as to avoid local stretching as much as possible and allow free shrinkage of the film in the transverse direction (i.e., the direction of the width).

On the other hand, where an unoriented film is transversely stretched by a clip tentering process, the stretching operation should preferably be carried out in such a way as to allow free shrinkage of the film, for example, by a process in which the spacing between adjacent clips is gradually reduced as the stretching operation proceeds.

Another preferred stretching process is to use an unoriented film which has previously been folded in the direction perpendicular to the direction of stretching.

The method of making polarizing films in accordance with the present invention will be more fully explained hereinbelow in connection with the four specific embodiments.

In the first embodiment, the film is transversely stretched while its longitudinal length is being forcedly reduced by 20% or more. The term "shrinkage rate" as used herein means the rate of change in the longitudinal dimension, or length, of the stretched film as compared with that of the unoriented film. When the unoriented film is imprinted film with a longitudinally extending mark having a predetermined length (L) and the mark length (l) of the stretched film is measured, the shrinkage rate is given by $(L-l)/L \times 100(\%)$. If this shrinkage rate is less than 20%, a polarizing film having good polarizing performance cannot be obtained even though the film is stretched with a stretch ratio of 2.5 or greater. Preferably, the shrinkage rate has a value approaching $(1-1/\sqrt{N}) \times 100(\%)$ where N is the stretch ratio.

It is preferable to stretch the unoriented film transfersely with a stretch ratio of 3.5 to 10. For example, where the unoriented film is transversely stretched on a tentering machine, the streth ratio is given by the ratio $L_2/L_1$ where $L_1$ and $L_2$ are the lateral distances between film-holding clips at the entrance and the exit, respectively.

Some specific processes for stretching the film transversely while shrinking it longitudinally have already been described hereinabove. For example, in the case of a continuous tentering machine, this can be accomplished by a process in which the spacing between adjacent film-holding clips is forcedly and gradually reduced in the stretching zone, or a process in which a conventional pantograph mechanism for use in simultaneous biaxial stretching is modified so that the traveling speed of the clips is gradually reduced as they travel in the machine direction. In the case of a batch type transverse stretching machine, the film-holding clips may be mounted on screw shafts which are symmetrical with respect to the axis of the machine. Thus, the film can be shrunk in the direction perpendicular to the direction of stretching (i.e., the longitudinal direction) by rotating the shafts while stretching the film. In any case, in order to prevent the development of defects (such as wrinkles, undulations and the like) in the appearance of the stretched film and to avoid the impairment of its optical uniformity, it is preferable to shrink the film to the predetermined shrinkage rate at a constant speed throughout the stretching period.

In accordance with this embodiment, a polarizing film can be continuously made by various types of processes. They include, for example, an in-line process in which, immediately after being formed, an unoriented film is fed to a tentering machine as described above and transversely stretched thereon, and an off-line process in which an unoriented film formed on a separate line is fed to a tentering machine as described above and transversely stretched thereon.

In the second embodiment, as contrasted with the first embodiment, the unoriented film is previously contracted so as to reduce its apparent length (or longitudinal dimension) to 80% or less of its actual length. If the apparent length of the film is not less than 80% of its actual length, a polarizing film having satisfactorily good polarizing properties cannot be obtained. The term "apparent length (l)" as used herein means the length, as projected and measured on a plane, of a corrugated, unoriented film obtained from a flat film having an actual length L. This can be determined by previously imprinting the flat film with a longitudinally extending mark having a predetermined length (L) and measuring the mark length of the resulting contracted film on a plane scale. The ratio of the apparent length (l) to the acutal length (L) (hereinafter referred to as "contraction ratio") may be suitably chosen within the above-described range according to the stretch ratio. However, it is preferable to use an unoriented film which has been contracted so as to give a contraction ratio (l/L) almost equal to $1/^3\sqrt{N}$, practically in the range of $1/^{2.5}\sqrt{N}$ to $1/^{3.5}\sqrt{N}$, where N is the stretch ratio. If the contraction ratio is greater than $1/^{3.5}\sqrt{N}$, the film will fail to exhibit good polarizing properties. On the other hand, if the contraction ratio is less than $1/^{2.5}\sqrt{N}$, the flatness of the film will be impaired and the film will tend to crack or tear in the direction of stretching.

In order to reduce the apparent length of the unoriented film, for example, the unoriented film may be passed between mating corrugated rolls at its heat distortion temperature or above to shape the film into a wavelike form. Alternatively, where the unoriented film is stretched on a tenter type transverse stretching machine, clips whose film-gripping surfaces are corrugated may be used to fold the film while holding it. Alternatively, in forming an unoriented film by melt extrusion, a casting roll (or cooling drum) having a corrugated surface may be used to give a wavelike form to the film.

In this case, no particular restrictions are imposed on the form of the contracted film. However, smoothly curved wavelike forms are preferred in view of the flatness and uniform quality of the stretched film. The pitch and depth of such a wavelike form may be suitably chosen according to the required contraction ratio, the conditions of the succeeding stretching process, and the like.

Also in this embodiment, the transverse stretch ratio is preferably in the range of 3.5 to 10. If the apparent length is sufficiently short as compared with its actual length, it is desirable to employ as high a stretch ratio as possible.

In the third embodiment, the unoriented film is longitudinally oriented by a roll stretching process in which a roll having a curved outer periphery as viewed in a section including the axis of the roll is used as the lower-speed roll of the stretching roll pair.

Preferably, the curved roll used in this embodiment has a sectional shape defining a smoothly curved surface as shown in Figs. 1 and 2. For example, when the unoriented film is passed over a roll having the sectional shape shown in Fig. 1, the unoriented film is curved along the roll surface and its apparent width (l) becomes shorter than the original width (L) of the film (see Fig. 3). Immediately after that, the film is stretched and then withdrawn by means of take-off rolls. Thus, there is obtained a uniaxially oriented film whose width approximates to l.

The values of L and l can be determined by reference to a transversely extending mark of predetermined length imprinted in about the middle of the film. Then, the ratio $(L-l)/L$ is defined as the degree of curvature of the curved roll. Although curved rolls having higher degrees of curvature are more preferred, the degree of curvature should ideally satisfy the following relation:

$$(L-l)/L = (1 - 1/\sqrt{N})$$

where N is the desired stretch ratio.

The curved roll may comprise a core roll which is usually made of steel and has a surface plated with a metal (such as nickel, chrome or the like) or coated with a synthetic resin, rubber or the like. It is usually preferable that its surface is heated at a temperature equal to or higher than the temperature at which the film can be oriented. The heating method which can be used is to pass a heat transfer medium through the cavity of the roll or to heat the roll externally, for example, by infrared radiation or the like.

In this embodiment, it is preferable to employ a multi-stage stretching process using a plurality of stretching roll sets each of which comprises a curved roll as described above and a high-speed take-off roll. Especially where a high stretch ratio is required or a broad unoriented film is used, a one-stage stretching process may be disadvantageous because the degree of curvature of the aforesaid curved roll cannot be increased so as to approach $(1 - 1/\sqrt{N})$. Then, it is advisable to employ a multi-stage stretching process. In this case, the intermediate take-off rolls may comprise curved rolls, provided that the take-off rolls constituting the final set comprise plain rolls.

An exemplary one-stage stretching process in accordance with the this embodiment is described with reference to Fig. 4. An unoriented film 2 is fed through feed rolls 3 comprising a pair of pinch rolls, passed over plain preheating rolls 4 and 4', and then stretched by means of high-speed take-off rolls 5 via a curved roll 1 to form an oriented film 2'. Thereafter, if desired, the film may be heat-treated to improve its dimensional stability to heat.

In this process, the stretch ratio is given by the ratio $(V_s/V_p)$ of the surface speed $(V_s)$ of the take-off rolls 5 to the surface speed $(V_p)$ of the feed rolls 3. Although the stretch ratio may be properly chosen according to the type of base resin used, orientation temperature, and the like, it is preferable to employ a stretch ratio of 3 or greater. More preferably, a stretch ratio of 4 to 10 is employed. In multi-stage stretching processes, the overall stretch ratio is given by the product of the stretch ratios of the respective stages.

In the fourth embodiment, the unoriented film is longitudinally oriented by a roll stretching process in which at least one forcedly driven roll is disposed between the low-speed rolls and the high-speed rolls and the film is allowed to slip on the surface of the roll while being kept at its orientation temperature or above.

Where a polarizing film is made by orienting an unoriented film by a roll stretching process, the orientation properties of the base polymer can be improved by employing the so-called long-interval process in which the film is stretched over a long roll-to-roll distance. On the basis of this long-interval stretching process. Japanese Patent Laid-Open No. 40874/'79 discloses a method of making polarizing films from a polyvinyl alcohol or dehydrochlorinated polyvinyl (polyene) resin.

However, if a crystalline thermoplastic resin film is oriented by this long-interval stretching process, the effects thereof will not be produced because of the so-called "necking" phenomenon in which a point of stretch appears in the vicinity of the low-speed rolls. It seems that the long-interval stretching process may be successfully carried out by controlling the heating conditions properly, using ingenious devices in the equipment, and the like. However, a significantly long distance between rolls will be required especially for the purpose of stretching a broad film with a high stretch ratio. This tends not only to increase the size of the equipment and raise the cost of production, but also to cause variation in quality.

In this embodiment, at least one forcedly driven roll is disposed between the low-speed rolls, on the film-feeding side, and the high-speed rolls. If the roll disposed between the low-speed rolls and the high-speed rolls is not forcedly driven but allowed to turn freely, the film may fail to slip uniformly. On the other hand, if the roll is fixed, the film may fail to slip stably, for example, due to variation in the fricational force of the roll surface. Preferably, the roll is forcedly driven so as to turn in the same direction as the film travels.

The surface roughness ($H_{max}$) of the forcedly driven roll depends on the type of base resin used. However, in order to achieve uniform slippage of the film and prevent adhesion or scratching of the film, the surface roughness should desirably be 5 μm or less, the preferred range being from about 0.1 to 2 μm. The term "surface roughness ($H_{max}$) as used herein means the maximum height of surface irregularities as measured by the method of JIS B-0601.

It is usually desirable that the surface of the roll is plated with a metal or coated with a resin, rubber, ceramics or the like.

It is also desirable that the surface temperature of the roll is equal to or higher than the temperature at which the base resin film can be oriented. If it is lower than that temperature, the film will not be oriented on the roll and will fail to provide a satisfactory polarizing film.

The commonly used heating method is to pass a heat transfer medium, such as water, oil or the like, through the cavity of the roll. In combination with that, there may be used auxiliary methods for heating the film, which include preheating with an ordinary heated roll or hot air, infrared heating, and the like.

No particular restrictions are imposed on the surface temperature of the aforesaid roll, provided that it is equal to or higher than the temperature at which the film can be oriented. However, in order to prevent sticking of the film or improve the orientation properties of the film, it is preferable to use a temperature close to the lowest temperature at which the film can be oriented. If two or more forcedly driven rolls are used to allow the film to slip thereon, their temperatures should desirably be chosen so that they become higher as the film travels.

In an exemplary process in accordance with this embodiment, a polarizing film can be made by feeding an unoriented film through low-speed feed rolls comprising a pair of pinch rolls, preheating it, bringing it into contact with a forcedly driven roll as described above over as long a distance as possible, stretching it with a predetermined stretch ratio by means of high-speed stretching rolls, and then heat-setting the stretch film, if desired. In this case, the stretch ratio may vary according to the resin composition or orientation temperature of the unoriented film and the temperature of the forcedly driven roll, though it usually ranges from 3 to 10. It is desirable to stretch the unoriented film with a high stretch ratio at as low a temperature as possible. The stretch ratio is given by the ratio of the surface speed ($V_s$) of the high-speed rolls to the surface speed ($V_p$) of the low-speed rolls on the free side.

No particular restriction is imposed on the surface speed ($V_r$) of the roll disposed between the low-speed rolls and the high-speed rolls. However, in order to achieve uniform slippage, the roll is preferably driven so as to turn at a speed satisfying the following conditions:

$$V_p \leqq V_r < V_s$$

The film is preferably brought into contact with the roll over as long a distance as possible, because this maximizes the slip area of the film and thereby enhances the effects of the present invention. The overall slip length can be increased, for example, by enlarging the external diameter of the roll and bringing the film into contact therewith over a distance approaching its entire circumference, or by providing two or more slip rolls and allowing the film to slip in a plurality of stages.

The present invention is further illustrated by the following examples.

In these examples, physical properties were evaluated according to the following procedures.

**EP 0 167 628 B1**

(1) Optical properties (light transmittance and degree of polarization)

Using an automatic recording spectrophotometer (Hitachi Model UV-200 Double Beam Spectrophotometer), the light transmittance ($T_o$) of a polarizing film was measured. Then, light transmittance at the maximum absorption wavelength ($\lambda_{max}$) was measured for two pieces of the polarizing film stacked in such a way that their directions of orientation were parallel to each other ($T//$) or their directions of orientation were perpendicular to each other ($T\perp$). Thereafter, the degree of polarization (V) of this polarizing film was calculated according to the following equation.

$$V = \sqrt{\frac{T//-T\perp}{T//+T\perp}} \times 100(\%)$$

(2) Dimensional stability (thermal shrinkage rate)

A sample having a length of 10 cm in the direction of orientation (and a width of 1 cm) was cut out and put into water boiling at atmospheric pressure. After 30 minutes, its dimension was measured and the degree of shrinkage was determined in terms of percentage.

(3) Flatness

A polarizing film was placed on a glass plate having a smooth surface. The contact between the film and the glass plate was examined by visual inspection and rated on the following basis:

◎ (good)>o>Δ>X (poor)

(4) Flexing resistance

A specimen of polarizing film having a length of 10 cm was wound about a glass rod of 5 mm diameter in the direction perpendicular to its orientation axis. The number of occurrences of cracking or tearing was counted.

Example 1

One kilogram of pellets of a polyethylene terephthalate resin (with an intrinsic viscosity of 0.67) was intimately blended ith 2 g of an anthraquinone-derived photodichroic disperse dye (Miketon Polyester Blue TGSF; manufactured by Mitsui Toatsu Chemicals Inc.) having a maximum absorption wavelength ($\lambda_{max}$) of 640 nm. Using an extruder of 40 mm diameter, the resulting blend was extruded at 280°C to form unoriented films (300 mm wide) varying in thickness.

A film (90 μm thick) so formed was cut into a piece of 20 mm width and 50 mm length. Using a Tensilon tensile tester (manufactured by Toyo-Baldwin Co.), this piece was longitudinally stretched at 77°C with a stretch ratio of 3.7 and then heat-set with an infrared lamp. From the resulting stretched film, a portion (about 50 μm thick) located substantially in the center thereof was taken as a polarizing film. Its values of f and f×R and its optical properties at the maximum absorption wavelength are shown in Table 1.

Example 2

Using a longitudinal roll stretching machine, an unoriented film (110 μm thick) obtained in Example 1 was stretched at a roll surface temperature of 75°C with a stretch ratio of 4.5 and then heat-set with a heated rolls at 180°C. The resulting stretched film was about 200 mm wide and about 50 μm thick. From this stretched film, a portion located 30 mm inside of one lateral end was taken as a polarizing film. Its values of f and f×R and its optical properties at the maximum absorption wavelength were as shown in Table 1.

Example 3

Using a tenter type transverse stretching machine, an unoriented film (110 μm thick and 1 mm long) obtained in Example 1 was stretched at an oven temperature of 75°C with a stretch ratio of 5.0 and then heat-set at 180°C for one minute. From the resulting stretched film (about 50 μm thick), a portion located 50 mm behind of the front bowed edge and in the middle of the film was taken as a polarizing film. Its values of f and f×R and its optical properties at the maximum absorption wavelength were as shown in Table 1.

Comparative example 1

From the stretched film obtained in Example 2, a portion located in about the middle of the film was taken as a polarizing film. Its values of f and f×R and its optical properties at the maximum absorption wavelength were as shown in Table 1.

Comparative example 2

From the stretched film obtained in Example 3, a portion located 40 cm behind the front edge and in the middle of the film (i.e., located substantially in the center of the film) was taken as a polarizing film. Its values of f and f×R and its optical properties at the maximum absorption wavelength were as shown in Table 1.

9

# EP 0 167 628 B1

TABLE 1

| | | Orienting conditions | | X-ray diffraction characteristics | | Optical properties (%) | |
|---|---|---|---|---|---|---|---|
| | | Temperature (°C) | Stretch ratio | f | f×R | Transmittance | Degree of polarization |
| Example | 1 | 77 | 3.5 | 0.75 | 15 | 34 | 81 |
| | 2 | 75 | 4.5 | 0.90 | 45 | 33 | 85 |
| | 3 | 75 | 5.0 | 0.91 | 53 | 34 | 88 |
| Comparative example | 1 | 75 | 4.5 | 0.65 | 20 | 38 | 65 |
| | 2 | 75 | 5.0 | 0.76 | 8 | 38 | 58 |

Examples 4 to 9

Pellets of a polyethylene terephthalate resin (with an intrinsic viscosity of 0.71) were intimately blended with an anthraquinone-derived disperse dye (Miketon Polyester "Blue M-34"; manufactured by Mitsui Toatsu Chemicals, Inc). The amount of the dye was adjusted so that the final polarizing film would have a single-layer light transmittance ($T_o$) of approximately 40%. Using a single-screw extruder (65 mm in diameter) fitted with a T-die (800 mm in width), the resulting blend was melt extruded at 290°C. The take-off speed was adjusted so as to give an average thickness of 75 μm, 150 μm or 300 μm in the middle of the film. The films so formed were slit to obtain unoriented films having a width of 500 mm.

In about the middle of each film, a mark having a length of 100 mm was imprinted in the transverse direction (i.e., the direction of the width). Thereafter, the film was introduced between lead-in nip rolls consisting of a rubber roll and a metal roll, passed over three preheating rolls heated at 65°C, 69°C and 74°C, respectively, in that order, and then stretched longitudinally by means of a pair of stretching nip rolls with the stretch ratio given in Table 2. It was confirmed that, in this process, the film was stretched while slipping on the surfaces of the three preheating rolls and shrinking in the transverse direction (i.e., the direction of the width). Thereafter, the film having passed through the stretching rolls was heat-set by contact with an annealing roll heated at 180°C (for several seconds) to obtain a polarizing film.

The thickness and mark length of each of the resulting polarizing films as well as its optical properties (at $\lambda_{max}$ of 640 nm) and dimensional stability to heat were measured. The results thus obtained are shown in Table 2.

Comparative examples 3 and 4

An unoriented film obtained in Example 6 and having an average thickness of 150 μm was stretched in the same manner as in Example 6, except that the third preheating roll rotating at the same surface speed as the lead-in nip rolls was provided with a pinch roll made of rubber and the unoriented film was kept in close contact with the third preheating roll. Thus, there were obtained polarizing films. The thickness and mark length of each polarizing film as well as its physical properties were measured. The results thus obtained are shown in Table 2.

10

TABLE 2

| Example | Unoriented film | | Stretch ratio | Stretched film | | $\frac{d \times L}{D \times l}$ | Optical properties | | Thermal shrinkage rate | X-ray diffraction charac-teristics | |
|---|---|---|---|---|---|---|---|---|---|---|---|
| | Thick-ness (D) | Mark length (L) | | Thick-ness (d) | Mark length (l) | X | Trans-mittance $(T_o)$ | Degree of polari-zation (V) | | f | f×R |
| 4 | (μm) 75 | (mm) 100 | 3.0 | (μm) 47 | (mm) 68 | 0.92 | (%) 41 | (%) 88 | (%) 0.5 | 0.91 | 46 |
| 5 | 75 | 100 | 4.0 | 41 | 57 | 0.96 | 39 | 93 | 1.5 | 0.92 | 55 |
| 6 | 150 | 100 | 3.5 | 86 | 58 | 0.85 | 38 | 92 | 1.0 | 0.85 | 33 |
| 7 | 100 | 100 | 4.5 | 75 | 51 | 0.98 | 39 | 91 | 1.5 | 0.93 | 53 |
| 8 | 300 | 100 | 4.0 | 168 | 59 | 0.95 | 40 | 94 | 1.5 | 0.93 | 61 |
| 9 | 300 | 100 | 5.0 | 138 | 48 | 0.96 | 39 | 96 | 2.0 | 0.92 | 58 |
| Comparative example 3 | 150 | 100 | 3.5 | 44 | 92 | 0.32 | 40 | 75 | 2.5 | 0.63 | 15 |
| 4 | 150 | 100 | 4.5 | 36 | 88 | 0.27 | 38 | 77 | 3.0 | 0.58 | 8 |

(Note 1) The film thickness is the average value of ten measurements taken at different longitudinal locations in about the middle of the film.

(Note 2) The mark length was measured at five longitudinal locations.

EP 0 167 628 B1

Example 10

An unoriented film (150 µm thick) obtained in Example 1 was imprinted with a longitudinally extending ink mark of 100 mm length in the middle of the film. On the other hand, a tentering machine was constructed by modifying a simultaneous biaxial stretching machine having clips of the pantograph type so that, in the stretching zone, the film speed was gradually reduced at a constant rate as the film traveled in the machine direction. The above unoriented film was fed to this tentering machine, stretched transversely in such a way that the lateral distance between clips increased from 200 mm at the entrance to 900 mm at the exit (i.e., with a stretch ratio of 4.5), and then heat-set to obtain a polyester-based polarizing film (about 60 µm thick). The temperatures of the preheating, stretching and heat-treating zones of the tentering machine were 90°C, 80°C and 180°C, respectively, and the film speed at the exit was 5 m/min.

In the polarizing film thus obtained, the mark length was 55 mm (with a shrinkage rate of 45%). When its X-ray diffusion characteristics and optical properties were measured, the values of f and f×R were 0.90 and 48, respectively, the transmittance ($T_o$) was 42%, and the degree of polarization (V) was 87%.

Example 11

Ten kilograms of nylon 6 resin pellets were blended with 10 g of a photodichroic azo dye ("Miketon Polyester Orange 3GSF"; manufactured by Mitsui Toatsu Chemicals, Inc.). Then, according to the melt extrusion process of Example 1, the resulting blend was formed into an unoriented film (270 mm wide) having a thickness of about 100 µm.

This film was cut to a length of 50 cm and imprinted with a longitudinally extending mark of 100 mm length in the middle portion of the film. Then, using a batch type stretching machine in which the spacing between adjacent clips could be gradually reduced by means of screw shafts throughout the stretching period, both edges of the film were held by clips and the entire system was placed in an oven at about 120°C. Thus, while the screw shafts were being rotated, the film was transversely stretched with a stretch ratio of 3.5 (in an amount of 300%). Thereafter, while being kept in that state, the entire system was transferred into an oven at about 180°C and heat-treated for about one minute to obtain a polyamide polarizing film (about 40 µm thick).

In this film, the mark length was 72 mm (with a contraction ratio rate of 28%), the optical properties were such that $T_o$=39% and V=76%, and the X-ray diffraction characteristics were such that f=0.83 and f×R=28.

Example 12

An unoriented film (100 µm thick) formed in Example 1 was imprinted with a longitudinally extending ink mark of 100 mm length in the middle of the film. This film was passed between a pair of mating gears to form a continuous corrugated film having a pitch of about 8 mm and a depth of about of 8 mm. When measured on a plane scale, the length of the aforesaid mark was 59 mm. This corrugated film was fed to a tenter type transverse stretching machine, stretched transversely with a stretch ratio of 4.5, and then heat-set under tension. In this tentering machine, the temperatures of the preheating, stretching and heat-treating zones were 80°C, 75°C and 190°C, respectively.

Physical properties of the flat portion, excluding the edge portions, of this polyester-based polarizing film (about 40 µm thick) were evaluated. The results thus obtained are shown in Table 3.

Example 13

The procedure of Example 12 was repeated except that the unoriented film was contracted so as to give a mark length of about 45 mm as measured on a plane scale. Thus, there was obtained a polarizing film having substantially the same thickness. The results of evaluation of its physical properties are also shown in Table 3.

Comparative example 5

The procedure of Example 12 was repeated except that an unoriented film which had not been corrugated and was in the form of a flat sheet was directly stretched. Thus, there was obtained a polarizing film having substantially the same thickness. The results of evaluation of its physical properties are also shown in Table 3.

Example 14

A polarizing film was made in the same manner as in Example 12, except that an unoriented film was contracted so as to give a mark length of about 65 mm as measured on a plane scale and then stretched with a stretch ratio of 3. Its physical properties are shown in Table 3.

Example 15

An unoriented film obtained in Example 11 was imprinted with a longitudinally extending mark of 100 mm length in the middle of the film. This film was fed to a tenter type transverse stretching machine provided with clips whose film-gripping surfaces were shaped into a wavelike form having a pitch of 20 mm and a depth of 20 mm. The temperatures of its preheating, stretching and heat-treating zones were 120°C, 110°C and 180°C, respectively. Thus, the film was transversely stretched with a stretch ratio of 3.5 and then heat-set to obtain a nylon-based polarizing film (about 50 μm thick).

When the length of the aforesaid mark was measured on a plane scale before the unoriented film entered the stretching zone, it was found to be 65 mm. The results of evaluation of physical properties of this polarizing film are shown in Table 3.

Example 16

In a longitudinal roll stretching machine as illustrated in Fig. 4, an unoriented film (150 μm thick) obtained in Example 1 was successively passed over three curved heating rolls (with a maximum diameter of 400 mm) having a degree of curvature of 0.16 and heated at 70°C (which, as a whole, gave an apparent degree of curvature of 0.4), and then stretched longitudinally with a stretch ratio of 4 by means of take-off stretching rolls (at 20 m/min). After having passed through the stretching rolls, the stretched film was heat-treated under tension by means of heat-setting rolls (at 190°C) to obtain a polarizing film (180 mm wide) having a thickness of about 70 μm.

The results of evaluation of physical properties of this polyester-based polarizing film are shown in Table 3.

Example 17

In a longitudinal stretching machine as illustrated in Fig. 4, an unoriented film obtained in Example 11 was successively passed over three curved rolls (with a degree of curvature of 0.11) heated at 110°C (which, as a whole, gave an apparent degree of curvature of 0.3), stretched longitudinally with a stretch ratio of 3.5 by means of take-off stretching rolls, and then heat-treated under tension by means of heat-setting rolls (at 180°C) to obtain a polarizing film (210 mm wide) having a thickness of about 40 μm.

The results of evaluation of physical properties of this polyamide-based polarizing film are shown in Table 3.

Example 18

A polarizing film was made in the same manner as in Example 16, except that the unoriented film was passed over four curved rolls including three curved rolls with a degree of curvature of 0.15 and one curved roll with a degree of curvature of 0.19 (which, as a whole, gave an apparent degree of curvature of 0.5). The results of evaluation of its physical properties are shown in Table 3.

Comparative example 6

A polarizing film was made in the same manner as in Example 16, except that ordinary plain, or uncurved, rolls were used as the lead-on rolls. The results of evaluation of its physical properties are shown in Table 3.

TABLE 3

| | Orientation process | Stretch ratio | Contrac-tion ratio (I/L) | Optical properties | | Flatness | Flexing resistance | X-ray diffraction characteristics | |
|---|---|---|---|---|---|---|---|---|---|
| | | | | Trans-mittance (T$_o$) | Degree of of polari-zation (V) | | | f | f×R |
| Example 12 | Transverse stretching on a tenter | 4.5 | 0.59 | %<br>42 | (%)<br>93 | o | 1 | 0.94 | 65 |
| 13 | " | 4.5 | 0.45 | 40 | 96 | x | 5 | 0.92 | 54 |
| Comparative example 5 | " | 4.5 | 0.95 | 41 | 78 | ◎ | 0 | 0.65 | 9 |
| Example 14 | " | 3 | 0.65 | 39 | 89 | o | 0 | 0.81 | 15 |
| 15 | " | 3.5 | 0.65 | 38 | 84 | o | 0 | 0.83 | 18 |
| 16 | Longitudinal roll stretching | 4 | 0.60 | 35 | 93 | o | 2 | 0.88 | 25 |
| 17 | " | 3.5 | 0.70 | 36 | 90 | o | 0 | 0.86 | 23 |
| 18 | " | 4 | 0.50 | 35 | 92 | x | 4 | 0.89 | 29 |
| Comparative example 6 | " | 4 | 0.91 | 34 | 76 | o | 0 | 0.62 | 7 |

\* In the case of transverse stretching on a tenter, the Contraction Ratio was determined by measuring the length of the mark imprinted on the film. In the case of longitudinal roll stretching, it was calculated from the degrees of curvature of the curved lead-on rolls.

## Example 19

An unoriented film (150 μm thick) obtained in Example 1 was introduced between low-speed feed rolls (with a surface speed of 3m/min) comprising a pair of pinch rolls. Then, while being in contact with about half the circumference of a metal-coated roll of 400 mm diameter (with a surface speed of 8 m/min) plated with chrome to a surface roughness ($H_{max}$) of 0.5 μm and heated at 70°C, the film was longitudinally stretched with a stretch ratio of 4 by means of high-speed rolls (with a surface speed of 12 m/min) comprising a pair of pinch rolls.

It was confirmed that, during this process, the film was stretched while slipping on the heated roll and shrinking in the transverse direction. In addition, the stretched film was heat-treated with an annealing roll (at 180°C) to obtain a polarizing film (70 μm thick).

The light transmittance ($T_o$) of this polarizing film was 40% and its degree of polarization (V) was 85%. Its X-ray diffraction characteristics were such that f=0.75 and f×R=18.

## Comparative example 7

A polarizing film (about 70 μm thick) was made in the same manner as in Example 19, except that an unoriented film having a thickness of 300 μm was used and the roll disposed between the low-speed rolls and the high-speed rolls was provided with a pinch roll made of rubber to bring the film into close contact therewith and thereby prevent slippage of the film. Its optical properties were such that $T_o$=39% and V=64%. Thus, its light transmittance was almost equal to that of the polarizing film obtained in Example 19, but its degree of polarization was inferior. Its X-ray diffraction characteristics were such that f=0.55 and f×R=6.

## Example 20

The unoriented film obtained in Example 11 was introduced through pinch rolls (with a surface speed of 5 m/min) located on the feed side, passed over two slip rolls (with surface temperatures of 95°C and 105°C and surface speeds of 7 m/min and 11 m/min disposed in parallel and having a surface roughness ($H_{max}$) of 1 μm and an external diameter of 300 mm so as to run in an X-shaped pattern, stretched longitudinally with a stretch ratio of 3 by means of high-speed rolls (with a surface speed of 15 m/min), and then heat-set to obtain a polarizing film (about 60 μm thick).

The optical properties of this polarizing film were such that $T_o$=35% and V=87%. Its X-ray diffraction characteristics were such that f=0.72 and f×R=12.

## Comparative example 8

A polarizing film (about 60 μm thick) was made in the same manner as in Example 20, except that an unoriented film having a thickness of about 180 μm was used and each of the two intermediately disposed rolls was provided with a rubber roll to keep the film in close contact therewith. When its optical properties were evaluated, it was found that $T_o$=36%, V=58%, f=0.82 and f×R=8. Thus, its degree of polarization was inferior to that of the polarizing film obtained in Example 20.

## Claims

1. A polarizing film containing a base resin and a photodichroic material which is characterized in that
(1) the uniaxial orientation coefficient (f), of the principal crystal axis of the base resin with respect to the reference axis is not less than 0.7, the reference axis being defined, when the impinging X-rays are perpendicular to the surface of the polarizing film, as an axis which is in the plane of the polarizing film and which makes an angle of 90° within the axis made by normal projection of the direction of the strongest X-rays in the Debye-Scherrer ring diffracted by crystal planes parallel to the principal crystal axis of the base resin on the polarizing film; and
(2) when X-rays travelling parallel to the reference axis impinge on a surface of the film which is perpendicular to the reference axis, the product (f×R) of the aforesaid uniaxial orientation coefficient (f) and the ratio ($R=(I_{min}/I_{max})\times100$) of the minimum value ($I_{min}$) to the maximum value ($I_{max}$) of diffracted X-ray intensity on the resulting Debye-Scherrer ring is not less than 10.

2. A polarizing film as claimed in claim 1 wherein the base resin is a hydrophobic resin.

3. A polarizing film as claimed in claim 2 wherein the base resin is a polyolefin resin, a polyester resin or a polyamide resin.

4. A polarizing film as claimed in claim 1 wherein the photodichroic material is a photodichroic organic coloring material.

5. A method of making a polarizing film containing a base resin and a photodichroic material which includes the step of orienting an unoriented film, the method being characterized in that the unoriented film is oriented in one direction with a stretch ratio of 2.5 or greater so as to give an X value of at least 0.5, the X value being calculated from the equation

$$X=(d\times L)/(D\times I) \qquad\qquad (I)$$

where D is the measured thickness of the unoriented film, L is the measured dimension of the unoriented

15

film in the direction perpendicular to the direction of orientation, d is the measured thickness of the oriented film, and l is the measured dimension of the oriented film in the direction perpendicular to direction of orientation.

6. A method of making a polarizing film as claimed in claim 5 wherein the photodichroic material is a photodichroic organic coloring material and the base resin is a polyester resin, a polyamide resin or a polyolefin resin.

7. A method as claimed in claim 5 wherein the unoriented film is transversely stretched while its longitudinal dimension is being forcedly reduced by 20% or more.

8. A method as claimed in claim 5 wherein the unoriented film is transversely stretched after it has been contracted so as to reduce its apparent longitudinal dimension to 80% or less of its actual longitudinal dimension.

9. A method as claimed in claim 8 wherein the contraction ratio of the unoriented film ranges from $1/^{3.5}\sqrt{N}$ to $1/^{2.5}\sqrt{N}$ where N is the stretch ratio.

10. A method as claimed in claim 5 wherein the unoriented film is longitudinally oriented by a roll stretching process in which a roll having a curved sectional shape is used as the lower-speed roll of the stretching roll pair.

11. A method as claimed in claim 5 wherein the unoriented film is longitudinally oriented by a roll stretching process in which at least one forcedly driven roll is disposed between the low-speed rolls and the high-speed rolls and the film is allowed to slip on the surface of the forcedly drived roll while being kept at its orientation temperature or above.

## Patentansprüche

1. Polarisationsfilm mit einer Harzgrundschicht und einem zweifarbigen Fotomaterial, dadurch gekennzeichnet,

(1) daß der einachsige Orientierungskoeffizient (f) der Hauptkristallachse der Harzgrundschicht im Verhältnis zur Bezugsachse nicht kleiner als 0,7 ist, wobei die Bezugsachse als Achse definiert ist, die, wenn die auftreffenden X-Strahlen rechtwinklig zur Oberfläche des Polarisationsfilmes sind, in der Ebene des Polarisationsfilmes ist und die einen Winkel von 90° mit der Achse einschließt, die von der senkrechten Projektion der Richtung der stärksten X-Strahlen im Debye-Scherrer-Ring gebildet ist, welche durch parallel zur Hauptkristallachse der Harzgrundschicht auf dem Polarisationsfilm angeordnete Kristallebenen abgelenkt sind; und

(2) daß wenn parallel zur Bezugsachse verlaufende X-Strahlen auf eine zur Bezugsachse senkrechte Oberfläche des Filmes auftreffen, das Produkt (f×R) des einachsigen Orientierungskoeffizienten (f) und des Verhältnisses $(R=(I_{min}/I_{min})\times100)$ des Minimalwertes $(I_{min})$ zum Maximalwert $(I_{max})$ der abgelenkten X-Strahlenintensität auf dem resultierenden Debye-Scherrer-Ring nicht kleiner als 10 ist.

2. Polarisationsfilm nach Anspruch 1, dadurch gekennzeichnet, daß die Harzgrundschicht aus einem hydrophoben Harz gebildet ist.

3. Polarisationsfilm nach Anspruch 2, dadurch gekennzeichnet, daß die Harzgrundschicht aus einem Polyolefinharz, einem Polyesterharz oder einem Polyamidharz gebildet ist.

4. Polarisationsfilm nach Anspruch 1, dadurch gekennzeichnet, daß das zweifarbige Fotomaterial von einem zweifarbigen organischen Farbmaterial gebildet ist.

5. Verfahren zur Herstellung eines Polarisationsfilmes mit einer Harzgrundschicht und einem zweifarbigen Fotomaterial, bei dem ein unorientierter Film ausgerichtet wird, dadurch gekennzeichnet, daß der unorientierte Film in einer Richtung mit einem Dehnungsverhältnis von wenigstens 2,5 ausgerichtet wird, derart, daß ein X-Wert von wenigstens 0,5 eingestellt wird, wobei der X-Wert sich aus der Beziehung

$$X=(d\times L)/(D\times l) \tag{I}$$

berechnet, wobei D die gemessene Dicke des unorientierten Filmes, L die gemessene Breite des unorientierten Filmes senkrect zur Orientierungsrichtung, d die gemessene Dicke des ausgerichteten Filmes und l die gemessene Breite des ausgerichteten Filmes senkrecht zur Orientierungsrichtung ist.

6. Verfahren nach Anspruch 5, dadurch gekennzeichnet, daß das zweifarbige Fotomaterial von einem zweifarbigen organischen Farbmaterial gebildet und daß die Harzgrundschicht von einem Polyesterharz, einem Polyamidharz oder einem Polyolefin gebildet ist.

7. Verfahren nach Anspruch 5, dadurch gekennzeichnet, daß der unorientierte Film in Querrichtung ausgedehnt wird, während seine Längerstreckung zwangsweise um wenigstens 20% verringert wird.

8. Verfahren nach Anspruch 5, dadurch gekennzeichnet, daß der unorientierte Film in Querrichtung ausgedehnt wird, nachdem er geschrumpft worden ist, derart, daß seine scheinbare Längserstreckung auf 80% oder weniger seiner wirklichen Längserstreckung verkürzt ist.

9. Verfahren nach Anspruch 8, dadurch gekennzeichnet, daß das Schrumpfverhältnis des unorientierten Filmes im Bereich von $1/^{3.5}\sqrt{N}$ bis $1/^{2.5}\sqrt{N}$ liegt, wobei N das Dehnungsverhältnis ist.

10. Verfahren nach Anspruch 5, dadurch gekennzeichnet, daß der unorientierte Film in Längsrichtung durch einen Roll-Dehnprozeß ausgerichtet wird, in welchem eine Rolle mit einem kurvenförmigen Querschnitt als Rolle mit geringerer Geschwindigkeit eines Dehnrollenpaares benutzt wird.

16

11. Verfahren nach Anspruch 5, dadurch gekennzeichnet, daß der unorientierte Film in Längsrichtung durch einen Roll-Dehnprozeß ausgerichtet wird, in welchem wenigstens eine zwangsweise angetriebene Rolle zwischen Rollen mit niedriger und Rollen mit hoher Geschwindigkeit angeordnet ist und in welcher der Film auf der Oberfläche der zwangsweise angetreibenen Rolle schlüpfen kann, während er in seiner Ausrichtungstemperatur oder darüber gehalten wird.

## Revendications

1. Un film polarisant contenant une résine de base et un matériau photo-dichroïque qui est caractérisé en ce que:

(1) le coefficient d'orientation uniaxiale (f) de l'axe cristallographique principal de la résine de base, par rapport à l'axe de référence, n'est pas inférieur à 0,7, l'axe de référence étant défini, lorsque les rayons X incidents sont perpendiculaires à la surface du film polarisant, comme un axe qui est dans le plan du film polarisant et qui fait un angle de 90° avec l'axe formé par la projection normale de la direction des rayons X les plus intenses dans l'anneau de Debye-Scherrer diffracté par des plans cristallographiques parallèles à l'axe cristallographique principal de la résine de base sur le film polarisant, et

(2) lorsque des rayons X se propageant parallèlement à l'axe de référence tombent sur une surface du film qui est perpendiculaire à l'axe de référence, le produit $(f \times R)$ du coefficient d'orientation uniaxiale précité (f) et du rapport $(R = (I_{min}/I_{max}) \times 100)$ entre la valeur minimale $(I_{min})$ et la valeur maximale $(I_{max})$ de l'intensité des rayons X diffractés sur l'anneau de Debye-Scherrer résultant, n'est pas inférieur à 10.

2. Un film polarisant selon la revendication 1, dans lequel la résine de base est une résine hydrophobe.

3. Un film polarisant selon la revendication 2, dans lequel la résine de base est une résine de polyoléfine, une résine de polyester ou une résine de polyamide.

4. Un film polarisant selon la revendication 1, dans lequel le matériau photo-dichroïque est un matériau colorant organique photodichroïque.

5. Un procédé de fabrication d'un film polarisant contenant une résine de base et un matériau photo-dichroïque, qui comprend l'opération consistant à orienter un film non orienté, le procédé, le procédé étant caractérisé en ce qu'on oriente dans une direction le film non orienté, avec un rapport d'étirage supérieur ou égal à 2,5, de façon à obtenir une valeur X d'au moins 0,5, la valeur X étant calculée d'après la relation:

$$x = (d \times L)/(D \times l)$$

dans laquelle D est l'épaisseur mesurée du film non orienté, L est la dimension mesurée du film non orienté dans la direction perpendiculaire à la direction d'orientation, d est l'épaisseur mesurée du film orienté, et l est la dimension mesurée du film orienté dans la direction perpendiculaire à la direction d'orientation.

6. Un procédé de fabrication d'un film polarisant selon la revendication 5, dans lequel le matériau photo-dichroïque est un matériau colorant organique photo-dichroïque, et la résine de base est une résine de polyester, une résine de polyamide ou une résine de polyoléfine.

7. Un procédé selon la revendication 5, dans lequel le film non orienté est étiré transversalement pendant que sa dimension longitudinale est réduite de force de 20% ou plus.

8. Un procédé selon la revendication 5, dans lequel le film non orienté est étiré transversalement après avoir été contracté de façon à réduire sa dimension longitudinale apparente à 80% ou moins de sa dimension longitudinale réelle.

9. Un procédé selon la revendication 8, dans lequel le rapport de contraction du film non orienté est compris entre $1/^{3,5}\sqrt{N}$ et $1/^{2,5}\sqrt{N}$, et désignant par N le rapport d'étirage.

10. Un procédé selon la revendication 5, dans lequel on oriente longitudinalement le film non orienté par un traitement d'étirage par des rouleaux, dans lequel on utilise un rouleau ayant un profil courbe pour le rouleau de plus faible vitesse de la paire de rouleaux d'étirage.

11. Un procédé selon la revendication 5, dans lequel on oriente longitudinalement le film non orienté par un traitement d'étirage par des rouleaux, dans lequel au moins un rouleau entraîné de force est disposé entre les rouleaux à faible vitesse, et les rouleaux à vitesse élevée, et le film peut glisser sur la surface du rouleau entraîné de force, tout en étant maintenu à sa température d'orientation ou à une température supérieure.

**EP 0 167 628 B1**

FIG. 1

FIG. 2

FIG. 3

1

FIG. 4